# EUROPÄISCHE PATENTANMELDUNG

(11) **EP 4 446 280 A1**
(43) Veröffentlichungstag der Anmeldung: **16.10.2024**
(21) Anmeldenummer: 24167738.4
(22) Anmeldetag: 28.03.2024
(51) Int. Cl.: B67C 3/20, B67C 3/28

(54) **VORRICHTUNG ZUM FÜLLEN VON BEHÄLTERN UND ZUGEHÖRIGES BETRIEBSVERFAHREN**

(30) Priorität: 06.04.2023 DE 102023108863
(71) Anmelder: KRONES AG, 93073 Neutraubling (DE)
(72) Erfinder: BREY, Christian, 93073 Neutraubling (DE); SCHMID, Martina, 93073 Neutraubling (DE)
(74) Vertreter: v. Bezold & Partner Patentanwälte - PartG mbB

(57) **Zusammenfassung**

Die Erfindung betrifft u.a. eine Vorrichtung (10) zum Füllen von Behältern (12), aufweisend eine Behältererfassungseinrichtung (24), mehrere Füllstationen (32) und eine Steuereinrichtung (48), die dazu konfiguriert ist, für die Behälter (12) jeweils ein Füllvolumen zum Füllen des jeweiligen Behälters (12) bis zu einer Sollfüllhöhe (5) in Abhängigkeit von einer erfassten Innenform des jeweiligen Behälters (12) zu ermitteln und Füllventile (40) jeweils in Abhängigkeit von dem ermittelten Füllvolumen und einem erfassten Füllgutdurchfluss zu dem jeweiligen Füllventil (40) zu betreiben. Vorteilhaft ermöglicht die Vorrichtung (10) eine sehr genaue Höhenfüllung von Behältern (12) auf Basis einer Füllvolumenermittlung für jeden einzelnen Behälter (12).

## Beschreibung

### Technisches Gebiet

Die Erfindung betrifft eine Vorrichtung zum Füllen von Behältern und ein Verfahren zum Betreiben einer Vorrichtung zum Füllen von Behältern.

### Technischer Hintergrund

Bei der Abfüllung von Füllgütern wie Bier oder kohlensäurehaltigen Getränken in Behälter, wie Glasflaschen, wird oftmals eine konstante Füllhöhe als Qualitätskriterium gefordert. Die Füllhöhen der gefüllten Behälter werden bei verschiedenen Füllsystemen durch verschiedene Effekte bzw. Parameter beeinflusst. Wird bei einem Rückluftrohrfüller der Füllstand erzeugt, indem bei ansteigendem Füllspiegel bei korrekter Höhe die Verbindung zwischen Behälter und Kessel durch die Flüssigkeit bedeckt wird und dadurch kein Gas mehr entweichen kann, so wird bei einem Sondenfüller durch den ansteigenden Füllspiegel im Behälter ein elektrischer Kurzschluss an der Sonde erzeugt und dadurch das Füllventil geschlossen.

Rückluftrohrfüller und Sondenfüller erfordern jeweils Hubvorrichtungen, um die Rückluftrohre oder Kurzschlusssonden in die Behälter einzuführen. Beispielsweise können die Behälter hierfür mittels Hubzylinder angehoben werden, nachdem sie zuvor auf Transportbandhöhe an den jeweiligen Füller übergeben wurden.

Nachteilig an diesen Füllsystemen kann sein, dass sie eine vergleichsweise aufwendige und damit teure Technik zum Realisieren der Hubvorrichtungen erfordern und zudem hohe Hygieneanforderungen nur sehr aufwendig realisierbar sind. Beispielsweise kann durch die Kurzschlusssonde der Hub des Behälters bis zur Anpressung des Behälters erhöht sein. Eine hygienische Isolatorbauweise kann nur schwierig umsetzbar sein. Die Realisierung eines Aseptikfüllers kann kaum oder gar nicht möglich sein. Der Prozesswinkel bzw. die Prozesszeit kann durch einen hohen Hub vergrößert sein, wodurch sich wiederum eine verringerte Leistung des Füllers ergeben kann. Die Implementierung einer Hubkurve ggf. inklusive Höhenverstellung zur Realisierung des Hubs sowie ein langes Hubgestänge und eine Zentrierglocke können aufwendig und teuer sein. Es kann sich zudem ein erhöhtes Moment auf das Füllerkarussell ergeben. Zudem können Keime, Verschmutzungen, Bakterien usw. durch Eintauchen der Sonde bzw. des Rückluftrohrs in die Behälter verschleppt werden. Eine CIP-Automatik (cleaning-in-place-Automatik) kann unhandlich und nicht bei jeder Teilung realisierbar sein. Eine Verstellung der Sonde oder des Rückluftrohrs kann nicht oder nur sehr aufwendig hygienisch ausführbar sein. Die Sonde oder das Rückluftrohr kann Bauraum blockieren, der bspw. zur Implementierung eines besseren CO2-Spülprozesses genutzt werden könnte.

Die WO 2007/058838 A2 offenbart eine Füllvorrichtung und ein Füllverfahren mit einem Träger zum Transportieren von Behältern und mit einer Vielzahl von Ventilen. Jedes der Ventile wird für eine individuelle, spezifische Zeitspanne geöffnet, um einen Flüssigkeitsstrom in die jeweiligen Behälter zu steuern, während die Behälter durch den Träger transportiert werden. Die Vorrichtung weist einen Eingangszuführungspfad auf, der die Behälter zu dem Träger führt, und mindestens einen Hilfssensor, der neben dem Eingangszuführungspfad positioniert ist, um die Behälter zu beobachten, während sie sich auf dem Eingangszuführungspfad befinden. Dr Hilfssensor dient dazu, eine volumetrische Kapazität der Behälter zu bestimmen, bevor die Behälter zum Befüllen auf dem Träger angeordnet werden. Die Vorrichtung und das Verfahren verzichten auf Sensoren zur Volumenstrom- oder Massenstromregelung an jedem einzelnen Ventil. Gemäß der WO 2007/058838 A2 sind solche Durchfluss- oder Massenstromsensoren, die jedem Ventil zugeordnet sind, teuer und können durch ein Ventil ersetzt werden, das sich auf der Grundlage eines Zeitplans öffnet und schließt.

Der Erfindung liegt die Aufgabe zu Grunde, eine verbesserte Technik zur Höhenfüllung von Behältern zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft eine Vorrichtung zum Füllen von Behältern. Die Vorrichtung weist eine Behältererfassungseinrichtung, die zum Erfassen einer jeweiligen Innenform der Behälter ausgebildet ist, auf. Die Vorrichtung weist mehrere Füllstationen auf, die (behälter-) stromabwärts von der Behältererfassungseinrichtung angeordnet sind und jeweils einen Aufnahmeraum für einen der Behälter, ein Füllventil zum Abgeben eines Füllguts zu dem in dem Aufnahmeraum der jeweiligen Füllstation positionierten Behälter und eine Durchflusserfassungseinrichtung zum Erfassen eines Füllgutdurchflusses zu dem Füllventil der jeweiligen Füllstation aufweisen. Die Vorrichtung weist ferner eine Steuereinrichtung auf, die dazu konfiguriert ist, für die Behälter jeweils ein Füllvolumen zum Füllen des jeweiligen Behälters bis zu einer (z. B. mittels einer Benutzerschnittstelle vorgebbaren) Sollfüllhöhe in Abhängigkeit von der von der Behältererfassungseinrichtung erfassten Innenform des jeweiligen Behälters zu ermitteln (z. B. zu berechnen). Die Steuereinrichtung ist ferner dazu konfiguriert, die Füllventile jeweils in Abhängigkeit von dem ermittelten Füllvolumen des in dem Aufnahmeraum der jeweiligen Füllstation positionierten Behälters und dem von der Durchflusserfassungseinrichtung erfassten Füllgutdurchfluss zu dem jeweiligen Füllventil zu betreiben, vorzugsweise derart, dass das ermittelte Füllvolumen vollständig mit Füllgut gefüllt wird.

Vorteilhaft ermöglicht die Vorrichtung eine Höhenfüllung von Behältern auf Basis einer Füllvolumenermittlung für jeden einzelnen Behälter. Damit kann auch eine exakte Höhenfüllung bei Behältern mit vergleichsweise stark schwankendem Innenvolumen (bzw. Füllvolumen) erreicht werden, wie dies beispielsweise bei Glasflachen mit bis zu ± 10 ml der Fall sein kann. Die Vorrichtung ermöglicht zudem, dass die eingangs genannten Nachteile überwunden werden können, sodass sich der Aufbau und die Konfiguration der Vorrichtung vereinfachen und die Hygiene erhöhen lässt. Vorteilhaft kann ein Verzicht auf ein Füllsonden- oder Rückluftrohrsystem zudem einen größeren Prozesswinkel für das eigentliche Füllen bereitstellen. Die Leistung der Vorrichtung kann erhöht werden. Vorteilhaft kann der Füllprozess durch die erfasste Innenform und das ermittelte Füllvolumen schon vor und auch während des Füllens optimiert werden. Dadurch kann vorzugsweise eine Sollfüllhöhe viel genauer erreicht werden, da die gefüllte Füllhöhe bezogen auf die erfasste Innenform und das ermittelte Füllvolumen erreicht wird, wobei vorteilhaft die Sollfüllhöhe abhängig von dem Behälterboden berücksichtigt wird. Höhentoleranzen, Wandstärkentoleranzen usw. der Behälter können dadurch kompensiert werden.

In einem Ausführungsbeispiel ist die Steuereinrichtung ferner dazu konfiguriert, für die Behälter jeweils ein Kopfvolumen für einen sich zwischen einer Behältermündung und der Sollfüllhöhe erstreckenden Kopfbereich der von der Behältererfassungseinrichtung erfassten Innenform des jeweiligen Behälters zu ermitteln (z. B. zu berechnen). Die Steuereinrichtung kann ferner dazu konfiguriert sein, die Füllventile jeweils ferner in Abhängigkeit von dem ermittelten Kopfvolumen des in dem Aufnahmeraum der jeweiligen Füllstation positionierten Behälters zu betreiben, vorzugsweise derart, dass das jeweilige Kopfvolumen ungefüllt bleibt. Vorteilhaft kann damit der Füllprozess und die möglichst genaue Erreichung der Sollfüllhöhe weiter optimiert werden.

Es wird darauf hingewiesen, dass die Technik bezüglich der Ermittlung des Kopfvolumens hierin auch als ein unabhängiger Aspekt offenbart ist. Beispielsweise kann dieser Aspekt eine Vorrichtung zum Füllen von Behältern betreffen. Die Vorrichtung weist eine Behältererfassungseinrichtung, die zum Erfassen einer jeweiligen Innenform der Behälter ausgebildet ist, auf. Die Vorrichtung weist mehrere Füllstationen auf, die (behälter-) stromabwärts von der Behältererfassungseinrichtung angeordnet sind und jeweils einen Aufnahmeraum für einen der Behälter und ein Füllventil zum Abgeben eines Füllguts zu dem in dem Aufnahmeraum der jeweiligen Füllstation positionierten Behälter aufweisen. Die Vorrichtung weist ferner eine Steuereinrichtung auf, die dazu konfiguriert ist, für die Behälter jeweils ein Kopfvolumen für einen sich zwischen einer Behältermündung und einer (z. B. mittels einer Benutzerschnittstelle vorgebbaren) Sollfüllhöhe erstreckenden Kopfbereich der von der Behältererfassungseinrichtung erfassten Innenform des jeweiligen Behälters zu ermitteln (z. B. zu berechnen). Die Steuereinrichtung ist ferner dazu konfiguriert, die Füllventile jeweils in Abhängigkeit von dem ermittelten Kopfvolumen des in dem Aufnahmeraum der jeweiligen Füllstation positionierten Behälters zu betreiben, vorzugsweise derart, dass das jeweilige Kopfvolumen ungefüllt bleibt.

In einem Ausführungsbeispiel sind die Füllventile jeweils in einer ersten Öffnungsstellung mit einem ersten Strömungsquerschnitt und einer zweiten Öffnungsstellung mit einem zweiten Strömungsquerschnitt, der größer als der erste Strömungsquerschnitt ist, positionierbar. Vorzugsweise kann die Steuereinrichtung ferner dazu konfiguriert sein, die Füllventile jeweils in Abhängigkeit von dem ermittelten Füllvolumen und/oder der erfassten Innenform des in dem Aufnahmeraum der jeweiligen Füllstation positionierten Behälters teilweise zum Positionieren in der ersten Öffnungsstellung und teilweise zum Positionieren in der zweiten Öffnungsstellung zu betreiben, vorzugsweise mit Positionieren in der ersten Öffnungsstellung im letzten Füllabschnitt zum Erreichen der Sollfüllhöhe. Vorteilhaft kann damit der Füllprozess selbst an die behälterindividuelle Innenform angepasst werden, sodass bspw. ein ungewünschtes, zu starkes Aufschäumen verhindert werden kann, z. B. bei Querschnittsverringerungen des Behälters oder am Hals des Behälters.

In einem weiteren Ausführungsbeispiel ist die Steuereinrichtung ferner dazu konfiguriert, für die Behälter jeweils einen Halsbereich in Abhängigkeit von der von der Behältererfassungseinrichtung erfassten Innenform des jeweiligen Behälters zu erkennen (z. B. zu identifizieren) und/oder ein Halsvolumen in Abhängigkeit von der von der Behältererfassungseinrichtung erfassten Innenform des jeweiligen Behälters zu ermitteln (z. B. zu berechnen). Vorzugsweise kann die Steuereinrichtung ferner dazu konfiguriert sein, die Füllventile jeweils ferner in Abhängigkeit von dem erkannten Halsbereich und/oder dem ermittelten Halsvolumen des in dem Aufnahmeraum der jeweiligen Füllstation positionierten Behälters zu betreiben, vorzugsweise derart, dass beim Füllen des erkannten Halsbereichs und/oder des ermittelten Halsvolumens eine Füllgeschwindigkeit verringert wird. Vorteilhaft kann damit der Füllprozess selbst an die behälterindividuelle Innenform angepasst werden, sodass bspw. ein ungewünschtes, zu starkes Aufschäumen beim Füllen des Behälterhalses verhindert werden kann.

In einer Ausführungsform kann die Steuereinrichtung ferner dazu konfiguriert sein, die Füllventile jeweils beim Füllen des erkannten Halsbereichs und/oder des ermittelten Halsvolumens des in dem Aufnahmeraum der jeweiligen Füllstation positionierten Behälters zum Positionieren in der ersten Öffnungsstellung zu betreiben.

In einer weiteren Ausführungsform ist die Behältererfassungseinrichtung zum Erfassen einer jeweiligen Innenform der Behälter dazu ausgebildet, mindestens eines zu erfassen von:
- eine jeweilige Innenumfangsfläche der Behälter;
- einen jeweiligen Innenumfangsflächenverlauf der Behälter;
- eine jeweilige Umfangswandstärke der Behälter;
- einen jeweiligen Umfangswandstärkenverlauf der Behälter;
- eine jeweilige Bodenwandstärke der Behälter;
- einen jeweiligen Bodenwandstärkenverlauf der Behälter;
- eine jeweilige Behälterhöhe der Behälter;
- eine jeweilige Behältermündung der Behälter;
- einen jeweiligen (z. B. Innen- und/oder Außen-) Querschnitt der Behälter; und
- einen jeweiligen (z. B. Innen- und/oder Außen-) Querschnittsverlauf der Behälter.

Vorteilhaft kann auf diese Weise die Erfassung der Innenform mit einem gewünschten Detailgrad an eine Vielzahl von unterschiedlichen Anforderungen angepasst werden.

In einer Ausführungsvariante weist die Behältererfassungseinrichtung ein Drehsystem (z. B. Drehteller), das zum Drehen je eines oder mehrerer der Behälter z. B. um eine Hochachse ausgebildet ist, auf, z. B. zum Erfassen der jeweiligen Innenform der Behälter. Alternativ oder zusätzlich kann die Behältererfassungseinrichtung zum Erfassen einer jeweiligen Innenform der Behälter dazu ausgebildet sein, die Behälter jeweils aus mehreren Winkeln und/oder von mehreren Seiten her zu erfassen. Vorteilhaft kann damit die Erfassung der Innenform des jeweiligen Behälters erheblich verbessert werden.

Es wird darauf hingewiesen, dass die Technik bezüglich des Drehsystems und/oder der Erfassung aus mehreren Winkeln und/oder von mehreren Seiten her hierin auch als ein unabhängiger Aspekt offenbart ist. Beispielsweise kann dieser Aspekt eine Vorrichtung zum Füllen von Behältern betreffen. Die Vorrichtung weist eine Behältererfassungseinrichtung, die zum Erfassen einer jeweiligen Innenform der Behälter ausgebildet ist, auf. Die Behältererfassungseinrichtung weist ein Drehsystem (z. B. Drehteller), das zum Drehen je eines oder mehrerer der Behälter z. B. um eine Hochachse ausgebildet ist, auf z. B. zum Erfassen der jeweiligen Innenform der Behälter. Alternativ oder zusätzlich kann die Behältererfassungseinrichtung zum Erfassen einer jeweiligen Innenform der Behälter dazu ausgebildet sein, die Behälter jeweils aus mehreren Winkeln und/oder von mehreren Seiten her zu erfassen. Die Vorrichtung weist mehrere Füllstationen auf, die (behälter-) stromabwärts von der Behältererfassungseinrichtung angeordnet sind und jeweils einen Aufnahmeraum für einen der Behälter und ein Füllventil zum Abgeben eines Füllguts zu dem in dem Aufnahmeraum der jeweiligen Füllstation positionierten Behälter aufweisen. Die Vorrichtung weist ferner eine Steuereinrichtung auf, die dazu konfiguriert ist, für die Behälter jeweils ein Füllvolumen zum Füllen des jeweiligen Behälters bis zu einer (z. B. mittels einer Benutzerschnittstelle vorgebbaren) Sollfüllhöhe in Abhängigkeit von der von der Behältererfassungseinrichtung erfassten Innenform des jeweiligen Behälters zu ermitteln (z. B. zu berechnen). Die Steuereinrichtung ist ferner dazu konfiguriert, die Füllventile jeweils in Abhängigkeit von dem ermittelten Füllvolumen des in dem Aufnahmeraum der jeweiligen Füllstation positionierten Behälters zu betreiben, vorzugsweise derart, dass das ermittelte Füllvolumen vollständig mit Füllgut gefüllt wird.

In einer weiteren Ausführungsvariante weist die Behältererfassungseinrichtung mindestens eine Kamera, eine Stereokamera, einen 3D-Scanner oder einen Computertomographen auf.

In einem Ausführungsbeispiel ist die Steuereinrichtung ferner dazu konfiguriert, die Füllventile jeweils ferner in Abhängigkeit von einer (z. B. mittels einer Benutzerschnittstelle vorgebbaren) Sollmindestfüllmenge zu betreiben, vorzugsweise derart, dass über die Sollfüllhöhe hinaus zum Erreichen der Sollmindestfüllmenge gefüllt wird, z. B. wenn die Sollmindestfüllmenge größer als das ermittelte Füllvolumen des jeweiligen Behälters ist. Vorzugsweise kann damit sichergestellt werden, dass beispielsweise eine regulatorische, z. B. gesetzliche, Mindestfüllmenge immer eingehalten wird.

Vorzugsweise sind die mehreren Füllstationen frei von Hubeinrichtungen zum Anheben und Absenken der mehreren Behälter und/oder frei von Füllsonden und/oder frei von Rückluftrohren.

Bevorzugt können die mehreren Füllstationen und die Behältererfassungseinrichtung miteinander verbunden sein, z. B. mittels eines Behälterförderers.

Ein weiterer Aspekt der vorliegenden Offenbarung betrifft eine Behälterbehandlungsanlage (z. B. zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel). Die Behälterbehandlungsanlage kann die Vorrichtung zum Füllen von Behältern wie hierin offenbart aufweisen.

Beispielsweise können die Behälter als Flaschen, Dosen, Kanister, Kartons, Flakons usw. ausgeführt sein. Besonders bevorzugt können die Behälter als Glasflaschen ausgeführt sein. Die Behälter sind vorzugsweise zumindest teilweise durchsichtig bzw. transparent.

Vorzugsweise kann sich der Begriff "Steuereinrichtung" auf eine Elektronik (z. B. ausgeführt als eine Treiberschaltung oder mit Mikroprozessor(en) und Datenspeicher) und optional zusätzlich eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Es ist möglich, dass die Steuereinrichtung ferner dazu konfiguriert ist, die mehreren Behälter in Abhängigkeit von der jeweils erfassten Innenform auf eine Beschädigung hin zu prüfen. Vorzugsweise kann die Steuereinrichtung ferner dazu konfiguriert sein, die Vorrichtung so zu betreiben, dass als beschädigt erkannte Behälter ausgeschleust und/oder von den mehreren Füllstationen nicht gefüllt werden.

Es ist auch möglich, dass die Steuereinrichtung ferner dazu konfiguriert ist, die mehreren Behälter in Abhängigkeit von der jeweils erfassten Innenform mit einer Sollinnenform zu vergleichen. Vorzugsweise kann die Steuereinrichtung ferner dazu konfiguriert sein, die Vorrichtung so zu betreiben, dass Behälter, die wesentlich und/oder über eine Toleranz hinaus von der Sollinnenform abweichen, ausgeschleust und/oder von den mehreren Füllstationen nicht gefüllt werden. Beispielsweise kann die Sollinnenform und/oder die Toleranz mittels einer Benutzerschnittstelle der Vorrichtung vorgebbar sein.

Es ist ebenfalls möglich, dass die Steuereinrichtung eine Benutzerschnittstelle zum Ausgeben mindestens einer Information bezüglich einer erfassten Innenform, eines ermittelten Füllvolumens, eines erfassten oder ermittelten Kopfbereichs, eines ermittelten Kopfvolumens, eines erfassten oder ermittelten Rumpfbereichs, eines erfassten oder ermittelten Halsbereichs und/oder eines ermittelten Halsvolumens mindestens eines der Behälter betreiben kann.

Ein weiterer Aspekt der vorliegenden Offenbarung betrifft ein Verfahren zum Betreiben einer Vorrichtung zum Füllen von Behältern, vorzugsweise wie hierin offenbart. Die Vorrichtung weist eine Steuereinrichtung, eine Behältererfassungseinrichtung und mehrere Füllstationen, die (behälter-) stromabwärts von der Behältererfassungseinrichtung angeordnet sind und jeweils einen Aufnahmeraum, ein Füllventil und eine Durchflusserfassungseinrichtung aufweisen, auf. Das Verfahren weist ein Erfassen einer jeweiligen Innenform der Behälter mittels der Behältererfassungseinrichtung (z. B. mittels mindestens einer Kamera, einer Stereokamera, eines 3D-Scanners oder eines Computertomographen der Behältererfassungseinrichtung) auf. Das Verfahren weist ein Ermitteln (z. B. Berechnen) eines jeweiligen Füllvolumens der Behälter bis zu einer (z. B. mittels einer Benutzerschnittstelle vorgebbaren) Sollfüllhöhe in Abhängigkeit von der erfassten jeweiligen Innenform mittels der Steuereinrichtung auf. Das Verfahren weist ein Betreiben der Füllventile zum Füllen des in dem Aufnahmeraum der jeweiligen Füllstation positionierten Behälters mittels der Steuereinrichtung in Abhängigkeit von dem ermittelten Füllvolumen des in dem Aufnahmeraum der jeweiligen Füllstation positionierten Behälters und dem von der Durchflusserfassungseinrichtung erfassten Füllgutdurchfluss zu dem jeweiligen Füllventil auf, vorzugsweise derart, dass das ermittelte Füllvolumen vollständig mit Füllgut gefüllt wird. Vorteilhaft lassen sich mit dem Verfahren die gleichen Vorteile erzielen, die bereits unter Bezugnahme auf die Vorrichtung beschrieben wurden. Selbiges gilt für die untenstehend erläuterten bevorzugten Ausführungsbeispiele usw. des Verfahrens.

In einem Ausführungsbeispiel weist das Verfahren ferner ein Ermitteln (z. B. Berechnen) eines jeweiligen Kopfvolumens der Behälter für einen sich zwischen einer Behältermündung und der Sollfüllhöhe erstreckenden Kopfbereich der erfassten Innenform des jeweiligen Behälters auf. Vorzugsweise kann das Betreiben der Füllventile zusätzlich abhängig von dem ermittelten Kopfvolumen des in dem Aufnahmeraum der jeweiligen Füllstation positionierten Behälters sein, bevorzugt derart, dass das jeweilige Kopfvolumen ungefüllt bleibt.

In einem weiteren Ausführungsbeispiel weist das Betreiben der Füllventile ein Positionieren der Füllventile jeweils teilweise in einer ersten Öffnungsstellung mit einem ersten Strömungsquerschnitt und teilweise in einer zweiten Öffnungsstellung mit einem zweiten Strömungsquerschnitt, der größer als der erste Strömungsquerschnitt ist, in Abhängigkeit von dem ermittelten Füllvolumen und/oder der erfassten Innenform des in dem Aufnahmeraum der jeweiligen Füllstation positionierten Behälters auf, vorzugsweise mit Positionieren in der ersten Öffnungsstellung im letzten Füllabschnitt zum Erreichen der Sollfüllhöhe.

In einer Ausführungsform weist das Verfahren ferner ein Erkennen (z. B. Identifizieren) eines jeweiligen Halsbereichs der Behälter in Abhängigkeit von der erfassten jeweiligen Innenform mittels der Steuereinrichtung und/oder ein Ermitteln (z. B. Berechnen) eines jeweiligen Halsvolumens der Behälter in Abhängigkeit von der erfassten jeweiligen Innenform mittels der Steuereinrichtung auf. Vorzugsweise kann das Betreiben der Füllventile zusätzlich abhängig von dem erkannten Halsbereich und/oder dem ermittelten Halsvolumen des in dem Aufnahmeraum der jeweiligen Füllstation positionierten Behälters sein, bevorzugt derart, dass beim Füllen des erkannten Halsbereichs und/oder des ermittelten Halsvolumens eine Füllgeschwindigkeit mittels des jeweiligen Füllventils verringert wird.

In einer weiteren Ausführungsform erfolgt das Erfassen der jeweiligen Innenform der Behälter mittels der Behältererfassungseinrichtung aus mehreren Winkeln und/oder von mehreren Seiten her und/oder beim Erfassen der jeweiligen Innenform der Behälter mittels der Behältererfassungseinrichtung wird der jeweils erfasste und/oder zu erfassende Behälter mittels eines Drehsystems (z. B. Drehteller) gedreht, vorzugsweise um eine Hochachse.

In einer Ausführungsvariante ist das Betreiben der Füllventile zusätzlich abhängig von einer (z. B. mittels einer Benutzerschnittstelle vorgebbaren) Sollmindestfüllmenge, vorzugsweise derart, dass über die Sollfüllhöhe hinaus zum Erreichen der Sollmindestfüllmenge gefüllt wird, z. B. wenn die Sollmindestfüllmenge größer als das ermittelte Füllvolumen des jeweiligen Behälters ist.

Der hierin verwendete Ausdruck "Volumen" kann sich beispielsweise auf eine normierte dimensionslose Zahl beziehen oder als Einheit eine Volumeneinheit (z. B. mm³ oder cm³) oder als Einheit eine Mengeneinheit (z. B. ml, cl oder l) aufweisen.

Der hierin verwendete Ausdruck "Menge" kann sich beispielsweise auf eine normierte dimensionslose Zahl beziehen oder als Einheit eine Volumeneinheit (z. B. mm³ oder cm³) oder als Einheit eine Mengeneinheit (z. B. ml, cl oder l) aufweisen.

Vorzugsweise kann die Innenform als eine dreidimensionale Innenform erfasst werden (z B. auch approximiert als mehrere aneinandergereihte Schichten bzw. Querschnitte).

Im Prinzip können die hierin offenbarten Techniken auch bei einer zeitgesteuerten Füllung eingesetzt werden. Beispielsweise kann die Steuereinrichtung dazu konfiguriert sein, die Füllventile so zu betreiben, dass diese für eine ermittelte Zeitdauer geöffnet werden, wobei die ermittelte Zeitdauer vorzugsweise abhängig von der erfassten Innenform und/oder dem ermittelten Füllvolumen und/oder dem ermittelten Kopfvolumen des jeweiligen Behälters ermittelt wird, z. B. von der Steuereinrichtung.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung einer Vorrichtung zum Füllen von Behältern gemäß einem Ausführungsbeispiel der vorliegenden Offenbarung;
- Figur 2: eine schematische Darstellung einer Füllstation der beispielhaften Vorrichtung; und
- Figur 3: eine Schnittdarstellung durch einen Behälter.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

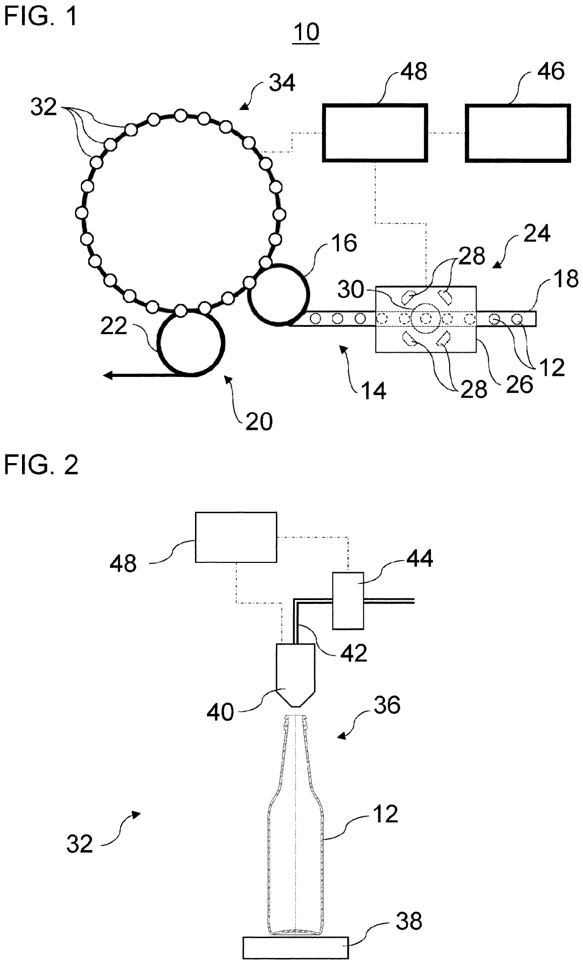

Die Figur 1 zeigt eine Vorrichtung 10 zum Füllen von Behältern 12. Der besseren Übersicht halber sind in Figur 1 nur einige Behälter 12 dargestellt, von denen wiederum nur einige mit einem eigenen Bezugszeichen versehen sind. In Figur 2 ist beispielhaft eine Füllstation 32 der Vorrichtung 10 dargestellt.

Die Vorrichtung 10 weist eine Behältererfassungseinrichtung 24, mehrere Füllstationen 32 und eine Steuereinrichtung 48 auf. Optional kann die Vorrichtung 10 beispielsweise zusätzlich einen Behälterförderer 14, einen (weiteren) Behälterförderer 20 und/oder eine Benutzerschnittstelle 46 aufweisen.

Der Behälterförderer 14 kann (behälter-) stromaufwärts von den Füllstationen 32 angeordnet sein. Beispielsweise kann der Behälterförderer 14 einen Einlaufstern 16 und/oder einen Förderabschnitt 18 aufweisen.

Der Einlaufstern 16 kann die Behälter 12 an die Füllstationen 32 übergeben, vorzugsweise einzeln bzw. im Einzeltransport.

Der Förderabschnitt 18 kann bevorzugt einspurig sein und/oder zum Einzeltransport der Behälter 12 ausgeführt sein. Der Förderabschnitt 18 kann beispielsweise (behälter-) stromaufwärts von dem Einlaufstern 16 angeordnet sein. An einem Ende des Förderabschnitts 18 können die Behälter, vorzugsweise einzeln bzw. im Einzeltransport, an den Einlaufstern 16 übergeben werden. Der Förderabschnitt 18 kann beispielsweise ein Förderabschnitt eines Linearförderers sein.

Der Behälterförderer 20 kann (behälter-) stromabwärts von den Füllstationen 32 angeordnet sein. Beispielsweise kann der Behälterförderer 20 einen Auslaufstern 22 aufweisen. Der Auslaufstern 22 kann gefüllte Behälter 12 von den Füllstationen 32 übernehmen, vorzugsweise einzeln bzw. im Einzeltransport. Bevorzugt kann der Behälterförderer 20 die Behälter beispielsweise einspurig und/oder im Einzeltransport transportieren.

Bevorzugt können die Behälter 12 nach dem Füllen noch verschlossen werden. Beispielsweise kann der Behälterförderer 20 die gefüllten Behälter 12 zu einer Verschließeinrichtung, z. B. ein Verschlie-ßerkarussell, fördern.

Die Behältererfassungseinrichtung 24 ist (behälter-) stromaufwärts von den Füllstationen 32 angeordnet. Beispielsweise kann die Behältererfassungseinrichtung 24 an dem Behälterförderer 14 angeordnet sein. Beispielsweise kann sich der Förderabschnitt 18 durch die Behältererfassungseinrichtung 24 oder entlang der Behältererfassungseinrichtung 24 erstrecken.

Die Behältererfassungseinrichtung 24 ist zum Erfassen einer jeweiligen Innenform der mehreren Behälter 12 ausgebildet ist. Die Behältererfassungseinrichtung 24 kann jegliche Sensortechnik aufweisen, die geeignet ist, die Innenformen der Behälter 12 zu erfassen. Beispielsweise kann die Behältererfassungseinrichtung 24 mindestens eine Kamera, eine Stereokamera, einen 3D-Scanner, einen Computertomographen oder ein sonstiges Inspektionssystem aufweisen.

Zum Erfassen der jeweiligen Innenform der Behälter 12 kann die Behältererfassungseinrichtung 24 beispielsweise eine jeweilige Innenumfangsfläche der Behälter 12, einen jeweiligen Innenumfangsflächenverlauf der Behälter 12, eine jeweilige Umfangswandstärke der Behälter 12, einen jeweiligen Umfangswandstärkenverlauf der Behälter 12, eine jeweilige Bodenwandstärke der Behälter 12, einen jeweiligen Bodenwandstärkenverlauf der Behälter 12, eine jeweilige Behälterhöhe der Behälter 12, eine jeweilige Behältermündung der Behälter 12, einen jeweiligen (z. B. Innen- und/oder Außen-) Querschnitt der Behälter 12 und/oder einen jeweiligen (z. B. Innen- und/oder Außen-) Querschnittsverlauf der Behälter 12 erfassen. Beispielsweise kann auf Basis eines erfassten Querschnitts ein (mittleres) Füllvolumen oder Gesamtinnenvolumen des jeweiligen Behälters 12 ermittelt werden.

Die Behältererfassungseinrichtung 24 kann beispielsweise ein Gehäuse 26, mindestens einen Sensor 28 und/oder eine Drehsystem 30 aufweisen.

Das Gehäuse 26 kann einen Behältereinlass und einen Behälterauslass aufweisen. Der Behältereinlass und der Behälterauslass können vorzugsweise an einander entgegengesetzten Seiten des Gehäuses 26 angeordnet sein. Das Gehäuse 26 kann beispielsweise kastenförmig sein. Innerhalb des Gehäuses 26 kann beispielsweise der mindestens eine Sensor 28 und/oder das Drehsystem 30 angeordnet sein. Vorzugsweise ist das Gehäuse 26 kastenförmig.

Der mindestens eine Sensor 28 kann beispielsweise ein Bildsensor, z. B. ein Siliziumsensor oder ein Röntgensensor, sein.

Bevorzugt kann die Behältererfassungseinrichtung 24 die Behälter 12 aus unterschiedlichen Winkeln und/oder von unterschiedlichen Seiten her erfassen. Beispielsweise kann die Behältererfassungseinrichtung 24 mehrere Sensoren 28 aufweisen, die verteilt und/oder unterschiedlich ausgerichtet angeordnet sind. Die Sensoren 28 können beispielsweise innerhalb des Gehäuses 26 angeordnet sein.

Das Drehsystem 30 kann einen oder mehrere Behälter 12 drehen, vorzugsweise um eine Hochachse. Beispielsweise kann dadurch ermöglicht werden, dass die Behälter 12 aus unterschiedlichen Richtungen und von unterschiedlichen Seiten von der Behältererfassungseinrichtung 24 bzw. von deren mindestens einen Sensor 28 erfasst werden können. Der mindestens eine Sensor 28 kann vorzugsweise auf einen Bereich gerichtet sein, innerhalb dessen das Drehsystem 30 den mindestens einen Behälter 12 drehen kann.

Die Behältererfassungseinrichtung 24 kann in Kommunikationsverbindung mit der Steuereinrichtung 48 zum Senden der erfassten Innenformen an die Steuereinrichtung 48 sein. Die Steuereinrichtung 48 und/oder die Behältererfassungseinrichtung 24 kann die erfasste Innenform eines Behälters 12 einer jeweiligen Füllstation 32 und/oder einem jeweiligen Füllventil 40, die/das den Behälter 12 füllen wird, zuordnen. Diese Zuordnung kann beispielsweise durch einen bekannten Zusammenhang zwischen einem Füllzeitpunkt in der jeweiligen Füllstation 32 und einem Erfassungszeitpunkt durch die Behältererfassungseinrichtung 24 und/oder durch eine bekannte Reihenfolge der erfassten Behälter 12 und eine bekannte Reihenfolge der Füllstationen 32 bzw. Füllventile 40 erfolgen.

Die Füllstationen 32 sind (behälter-) stromabwärts von der Behältererfassungseinrichtung 24 angeordnet. Die Füllstationen 32 können die Behälter 12 mit einem, vorzugsweise flüssigen oder pastösen, Füllgut füllen. Das Füllgut kann kohlensäurehaltig oder still sein.

Es ist möglich, dass die Behälter 12 in den Füllstationen 32 ebenfalls evakuiert, vorgespannt und/oder gespült werden können. Entsprechend können die Füllstationen 32 jeweils einen Evakuierungskanal, einen Vorspannkanal und/oder einen oder mehrere Spülkanäle mit jeweils unterschiedlichen Drücken aufweisen.

Beispielsweise kann die Vorrichtung 10 einen Füller 34 mit den Füllstationen 32 aufweisen. Der Füller 34 ist bevorzugt als ein Rundläufer-Füller bzw. ein Füllkarussell ausgeführt. Beispielsweise können die Füllstationen 32 verteilt um einen Umfang des Füllers 34 angeordnet sein. Der besseren Übersicht halber sind in der Figur 1 nur einige der Füllstationen 32 mit einem eigenen Bezugszeichen versehen.

Die Füllstation 32 weisen jeweils einen Aufnahmeraum 36, ein Füllventil 40 und optional eine Durchflusserfassungseinrichtung 44 auf.

In dem Aufnahmeraum 36 kann jeweils ein Behälter 12 zum Füllen aufgenommen bzw. positioniert werden.

Der Behälter 12 kann in dem Aufnahmeraum 36 mittels einer Behälterabstützung 38 der jeweiligen Füllstation 32 abgestützt sein. Die Behälterabstützung 38 kann beispielsweise eine Bodenplatte zum bodenseitigen Abstützen des jeweiligen Behälters 12 aufweisen. Alternativ oder zusätzlich kann die Behälterabstützung 38 den Behälter 12 beispielsweise an dessen Mantel oder Hals abstützen.

Der Aufnahmeraum 36 kann oberseitig von dem Füllventil 40 der jeweiligen Füllstation 32 begrenzt sein. Der Aufnahmeraum 36 kann unterseitig von der Bodenplatte der Behälterabstützung 38 der jeweiligen Füllstation 32 begrenzt sein.

Das Füllventil 40 kann das Füllgut in den Behälter 12, der im Aufnahmeraum 36 der jeweiligen Füllstation positioniert ist, abgeben.

Beispielsweise kann das Füllventil 40 zum wahlweisen Freigeben oder Blockieren eines Füllgutkanals 42 der jeweiligen Füllstation 32 ausgebildet sein. Der Füllgutkanal 42 kann das Füllventil 40 und einen Füllguttank miteinander verbinden.

Das Füllventil 40 kann beispielsweise elektrisch, elektromagnetisch, pneumatisch, hydraulisch oder mechanisch betätigt werden. Ein Betrieb des Füllventils 40 kann von der Steuereinrichtung 48 gesteuert sein.

Bevorzugt kann das Füllventil 40 ein bewegbares, vorzugsweise verschiebbares, Ventilglied zum Öffnen und Schließen des Füllventils 40 aufweisen. Das Ventilglied kann vorzugsweise einen kegelförmigen, besonders bevorzugt kegelstumpfförmigen, Abschnitt aufweisen, der von einem Ventilsitz des Füllventils 40 zum Öffnen des Füllventils 40 abhebbar ist.

Besonders bevorzugt kann das Füllventil 40 in mehreren Öffnungsstellungen mit unterschiedlichen Strömungsquerschnitten positionierbar sein. Es ist auch möglich, dass das Füllventil 40 stufenlos verstellbar bzw. öffenbar ist.

Beispielsweise kann das Füllventil 40 in einer ersten Öffnungsstellung mit einem ersten Strömungsquerschnitt und einer zweiten Öffnungsstellung mit einem zweiten Strömungsquerschnitt positionierbar sein. Der zweite Strömungsquerschnitt kann größer als der erste Strömungsquerschnitt sein.

Es ist möglich, dass ein Auslass des Füllventils 40 und eine Behältermündung des Behälters 12 in dem jeweiligen Aufnahmeraum 36 für das Füllen aneinander anpressbar sind. Hierfür kann die Füll-station 32 eine, vorzugsweise vertikale, Verstelleinrichtung aufweisen (nicht gesondert in den Figu-ren dargestellt). Die Verstelleinrichtung kann die Behälterabstützung 38 (zusammen mit dem abge-stützten Behälter) hin zu und weg von dem Auslass des Füllventils 40 bewegen. Alternativ oder zusätzlich kann die Verstelleinrichtung das Füllventil 40 hin zu und weg von der Behälterabstützung 38 (bzw. dem abgestützten Behälter 12) bewegen. Die Verstelleinrichtung kann bspw. elektrisch, elektromagnetisch, pneumatisch, hydraulisch oder mechanisch betrieben werden, z. B. von der Steuereinrichtung 48. Die Verstelleinrichtung kann bspw. gesteuert von der Steuereinrichtung 48 ausfahren und einfahren.

Die Durchflusserfassungseinrichtung 44 ist dazu ausgebildet, einen Füllgutdurchfluss zu dem Füllventil 40 der jeweiligen Füllstation 32 zu erfassen. Beispielsweise kann die Durchflusserfassungseinrichtung 44 einen Durchfluss durch den Füllgutkanal 42 erfassen. Beispielsweise kann die Durchflusserfassungseinrichtung 44 den Durchfluss messen, z. B. mengen- und/oder volumenmäßig. Die Durchflusserfassungseinrichtung 44 kann ein Messsignal, das den erfassten Durchfluss angibt, ausgeben, z. B. zu der Steuereinrichtung 48.

Die Durchflusserfassungseinrichtung 44 kann jegliches geeignetes Durchflussmessprinzip zum Erfassen des Durchflusses aufweisen. Besonders bevorzugt kann die Durchflusserfassungseinrichtung 44 eine magnetisch-induktive Durchflusserfassungseinrichtung, eine Ultraschall-Durchflusserfassungseinrichtung oder ein Massendurchflussmesser sein.

Die Benutzerschnittstelle 46 kann eine Ausgabeeinrichtung und/oder eine Eingabeeinrichtung aufweisen.

Die Ausgabeeinrichtung kann beispielsweise eine akustische, visuelle und/oder haptische Ausgabeeinrichtung sein. Über die Ausgabeeinrichtung können Informationen an einen Benutzer ausgegeben werden. Die Ausgabeschnittstelle kann beispielsweise eine (z. B. berührungsempfindliche) Anzeige, einen Lautsprecher und/oder mindestens eine Signalleuchte aufweisen.

Die Eingabeeinrichtung kann beispielsweise eine akustische, visuelle und/oder taktile Eingabeeinrichtung sein. Über die Eingabeeinrichtung können Informationen, vorzugsweise Eingabebefehle für die Steuereinrichtung 48, von einem Benutzer eingegeben werden. Die Eingabeeinrichtung kann beispielsweise eine berührungsempfindliche Anzeige, eine Tastatur, mindestens einen Knopf oder Schalter o. Ä., eine Kamera und/oder ein Mikrofon aufweisen.

Mittels der Benutzerschnittelle 46 bzw. der Eingabeeinrichtung kann beispielsweise eine Sollfüllhöhe für die Behälter 12 und/oder eine Sollmindestfüllmenge für die Behälter 12 vorgegeben und ggf. geändert werden. Die Information bezüglich der Sollfüllhöhe und/oder der Sollmindestfüllmenge für die Behälter 12 kann beispielsweise in einem Datenspeicher der Steuereinrichtung 48 gespeichert sein.

Die Steuereinrichtung 48 kann die Vorrichtung 10 betreiben bzw. deren Betrieb steuern. Im Einzelnen kann die Steuereinrichtung 48 beispielsweise einen Betrieb der Füllstationen 32, einen Betrieb der Füllventile 40 und/oder einen Betrieb der Benutzerschnittstelle 46 steuern.

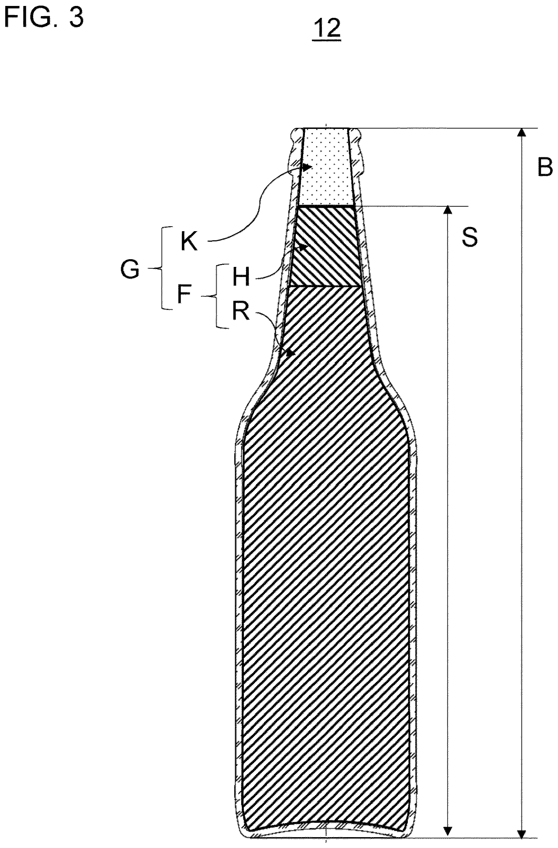

Zur Verbesserung des Verständnisses bezüglich des Betriebs der Steuereinrichtung 48 ist nachstehend auf Figur 3 Bezug genommen.

In Figur 3 ist ein Behälter 12 schematisch dargestellt.

Der Behälter 12 weist eine Behälterhöhe B auf. Die Behälterhöhe B erstreckt sich zwischen einer Unterseite eines Bodens des Behälters 12 und einer Behältermündung des Behälters 12.

Der Behälter 12 soll bis zu der Sollfüllhöhe S von einer der Füllstationen 32 gefüllt werden. Die Sollfüllhöhe S erstreckt sich beispielsweise ausgehend von einer Unterseite oder Oberseite eines Bodens des Behälters 12. Wie erwähnt kann die Sollfüllhöhe S beispielsweise mittels der Benutzerschnittstelle 46 vorgegeben werden.

Die Sollfüllhöhe S kann ein Inneres des Behälters 12 in zwei Bereich unterteilen.

Oberhalb der Sollfüllhöhe S kann ein Kopfbereich K des Behälters 12 positioniert sein. Der Kopfbereich K kann sich zwischen einer Behältermündung des Behälters 12 und der Sollfüllhöhe S erstrecken. Der Kopfbereich K kann ein Volumen aufweisen, das auch als Kopfvolumen oder Kopfraum bezeichnet werden kann. In Figur 3 ist der Kopfbereich K gepunktet dargestellt.

Unterhalb der Sollfüllhöhe S kann ein (gewünschter) Füllbereich F des Behälters 12 positioniert sein. Der Füllbereich F des Behälters 12 kann sich zwischen der Sollfüllhöhe S und einem Boden des Behälters 12 erstrecken. Der Füllbereich F kann ein Volumen aufweisen, das auch als Füllvolumen bezeichnet werden kann. In Figur 3 ist der Füllbereich F schraffiert dargestellt.

Es ist möglich, dass der Füllbereich F noch feiner untergliedert ist. Beispielsweise kann der Füllbereich F einen Halsbereich H und einen Rumpfbereich R des Behälters 12 aufweisen. Der Halsbereich H kann ein Volumen aufweisen, das auch als Halsvolumen bezeichnet werden kann. Der Rumpfbereich R kann ein Volumen aufweisen, das auch als Rumpfvolumen bezeichnet werden kann. In Figur 3 sind der Halsbereich H und der Rumpfbereich R unterschiedlich schraffiert dargestellt.

Der Kopfbereich K und der Füllbereich F können zusammen den Gesamtinnenbereich G des Behälters B bilden. Der Gesamtinnenbereich G kann ein Volumen aufweisen, das auch als Gesamtinnenvolumen bezeichnet werden kann.

Die Steuereinrichtung 48 ermittelt für die Behälter 12 jeweils das Füllvolumen (des Füllbereichs F) in Abhängigkeit von der von der Behältererfassungseinrichtung 24 erfassten Innenform des jeweiligen Behälters 12. Die Ermittlung kann beispielsweise durch Berechnung des Füllvolumens erfolgen.

Die Steuereinrichtung 48 betreibt die Füllventile 40 jeweils abhängig von dem ermittelten Füllvolumen des in dem Aufnahmeraum 36 der jeweiligen Füllstation 32 positionierten Behälters 12 und dem von der Durchflusserfassungseinrichtung 44 erfassten Füllgutdurchfluss zu dem jeweiligen Füllventil 40. Vorzugsweise können die Füllventile 40 derart betrieben werden, dass der jeweilige Behälter 12 mit genau oder mindestens so viel Füllgut entsprechend dem ermittelten Füllvolumen gefüllt wird.

Es ist möglich, dass eine Sollmindestfüllmenge vorgeben ist. Beispielsweise kann die Steuereinrichtung 48 die Füllventile 40 in Abhängigkeit von der vorgegebenen Sollmindestfüllmenge so betreiben, dass der jeweilige Behälter 12 mit mindestens so viel Füllgut entsprechend der vorgegebenen Sollmindestfüllmenge gefüllt wird.

Sofern das ermittelte Füllvolumen des jeweiligen Behälters 12 größer als die Sollmindestfüllmenge ist, kann der jeweilige Behälter 12 mit genau so viel Füllgut entsprechend dem ermittelten Füllvolumen gefüllt werden, sodass die Sollfüllhöhe S erreicht wird.

Sofern das ermittelte Füllvolumen des jeweiligen Behälters 12 gleich der Sollmindestfüllmenge ist, kann der jeweilige Behälter 12 mit genau so viel Füllgut entsprechend dem ermittelten Füllvolumen und der Sollmindestfüllmenge gefüllt werden, sodass die Sollfüllhöhe S erreicht wird.

Sofern das ermittelte Füllvolumen des jeweiligen Behälters 12 kleiner als die Sollmindestfüllmenge ist, kann der jeweilige Behälter 12 mit genau so viel Füllgut entsprechend der Sollmindestfüllmenge gefüllt werden, sodass die Sollfüllhöhe S in diesem Fall (geringfügig) überschritten werden könnte.

Vorzugsweise kann die Steuereinrichtung 48 für die mehreren Behälter 12 jeweils ein Kopfvolumen für einen Kopfbereich K der erfassten Innenform des jeweiligen Behälters 12 ermitteln, z. B. berechnen.

Es ist möglich, dass die Steuereinrichtung 48 die Füllventile 40 ferner in Abhängigkeit von dem ermittelten Kopfvolumen des in dem Aufnahmeraum 36 der jeweiligen Füllstation 32 positionierten Behälters 12 betreibt, vorzugsweise derart, dass das jeweilige Kopfvolumen ungefüllt bleibt.

Es ist auch möglich, dass die Steuereinrichtung 48 für die mehreren Behälter 12 jeweils das Gesamtinnenvolumen G und das Kopfvolumen K in Abhängigkeit von der jeweils erfassten Innenform ermittelt. Beispielsweise kann die Steuereinrichtung 48 dann aus dem Gesamtinnenvolumen abzüglich des Kopfvolumens das Füllvolumen ermitteln, z. B. berechnen.

Bevorzugt kann die Steuereinrichtung 48 die Füllventile 40 jeweils in Abhängigkeit von dem ermittelten Füllvolumen und/oder der erfassten Innenform des in dem Aufnahmeraum 36 der jeweiligen Füllstation 32 positionierten Behälters 12 teilweise zum Positionieren in der ersten Öffnungsstellung und teilweise zum Positionieren in der zweiten Öffnungsstellung betreiben. Vorzugsweise kann das jeweilige Füllventil 40 zum Ende des Füllens hin bzw. im letzten Füllabschnitt zum Erreichen der Sollfüllhöhe S von der Steuereinrichtung 48 zum Positionieren in der ersten Öffnungsstellung betrieben werden.

Vorzugsweise kann die Steuereinrichtung 48 für die mehreren Behälter 12 jeweils einen Halsbereich H und/oder ein Halsvolumen des Halsbereichs H in Abhängigkeit von der von der Behältererfassungseinrichtung 24 erfassten Innenform des jeweiligen Behälters 12 erkennen und/oder ermitteln. Die Füllventile 40 können von der Steuereinrichtung 48 jeweils in Abhängigkeit von dem erkannten Halsbereich H und/oder dem ermittelten Halsvolumen des in dem Aufnahmeraum 36 der jeweiligen Füllstation 32 positionierten Behälters 12 betrieben werden. Vorzugsweise können die Füllventile 40 derart betrieben werden, dass beim Füllen des erkannten Halsbereichs H und/oder des ermittelten Halsvolumens eine Füllgeschwindigkeit verringert wird.

Ein Füllen des erkannten Halsbereichs H und/oder des ermittelten Halsvolumens kann abhängig von der Erfassung der jeweiligen Durchflusserfassungseinrichtung 44 und dem ermittelten Füllvolumen erkannt werden.

Ein Verringern der Füllgeschwindigkeit kann beispielsweise durch ein Verringern eines Öffnungsquerschnitts des jeweiligen Füllventils 40 erreicht werden. So kann beispielsweise von der zweiten Öffnungsstellung zu der ersten Öffnungsstellung geschaltet werden, wenn das Füllen des Halsbereichs H und/oder des Halsvolumens beginnt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Behältererfassungseinrichtung, der mehreren Füllstationen, der Aufnahmeräume, der Füllventile, der Durchflusserfassungseinrichtungen und/oder der Steuereinrichtung des unabhängigen Anspruchs 1 offenbart.

### Bezugszeichenliste

- 10: Vorrichtung zum Füllen von Behältern
- 12: Behälter
- 14: Behälterförderer
- 16: Einlaufstern
- 18: Förderabschnitt
- 20: Behälterförderer
- 22: Auslaufstern
- 24: Behältererfassungseinrichtung
- 26: Gehäuse
- 28: Sensor
- 30: Drehsystem
- 32: Füllstation
- 34: Füller
- 36: Aufnahmeraum
- 38: Behälterabstützung
- 40: Füllventil
- 42: Füllgutkanal
- 44: Durchflusserfassungseinrichtung
- 46: Benutzerschnittstelle
- 48: Steuereinrichtung

- B: Behälterhöhe
- F: Füllbereich
- G: Gesamtinnenbereich
- H: Halsbereich
- K: Kopfbereich
- R: Rumpfbereich
- S: Sollfüllhöhe

## Patentansprüche

1. Vorrichtung (10) zum Füllen von Behältern (12), aufweisend:
eine Behältererfassungseinrichtung (24), die zum Erfassen einer jeweiligen Innenform der Behälter (12) ausgebildet ist;
mehrere Füllstationen (32), die stromabwärts von der Behältererfassungseinrichtung (24) angeordnet sind und jeweils einen Aufnahmeraum (36) für einen der Behälter (12), ein Füllventil (40) zum Abgeben eines Füllguts zu dem in dem Aufnahmeraum (36) der jeweiligen Füllstation (32) positionierten Behälter (12) und eine Durchflusserfassungseinrichtung (44) zum Erfassen eines Füllgutdurchflusses zu dem Füllventil (40) der jeweiligen Füllstation (32) aufweisen; und
eine Steuereinrichtung (48), die dazu konfiguriert ist:
- für die Behälter (12) jeweils ein Füllvolumen zum Füllen des jeweiligen Behälters (12) bis zu einer Sollfüllhöhe (S) in Abhängigkeit von der von der Behältererfassungseinrichtung (24) erfassten Innenform des jeweiligen Behälters (12) zu ermitteln; und
- die Füllventile (40) jeweils in Abhängigkeit von dem ermittelten Füllvolumen des in dem Aufnahmeraum (36) der jeweiligen Füllstation (32) positionierten Behälters (12) und dem von der Durchflusserfassungseinrichtung (44) erfassten Füllgutdurchfluss zu dem jeweiligen Füllventil (40) zu betreiben, vorzugsweise derart, dass das ermittelte Füllvolumen vollständig mit Füllgut gefüllt wird.

2. Vorrichtung (10) nach Anspruch 1, wobei:
die Steuereinrichtung (48) ferner dazu konfiguriert ist:
- für die Behälter (12) jeweils ein Kopfvolumen für einen sich zwischen einer Behältermündung und der Sollfüllhöhe (S) erstreckenden Kopfbereich (K) der von der Behältererfassungseinrichtung (24) erfassten Innenform des jeweiligen Behälters (12) zu ermitteln; und
- die Füllventile (40) jeweils ferner in Abhängigkeit von dem ermittelten Kopfvolumen des in dem Aufnahmeraum (36) der jeweiligen Füllstation (32) positionierten Behälters (12) zu betreiben, vorzugsweise derart, dass das jeweilige Kopfvolumen ungefüllt bleibt.

3. Vorrichtung (10) nach Anspruch 1 oder Anspruch 2, wobei:
die Füllventile (40) jeweils in einer ersten Öffnungsstellung mit einem ersten Strömungsquerschnitt und einer zweiten Öffnungsstellung mit einem zweiten Strömungsquerschnitt, der größer als der erste Strömungsquerschnitt ist, positionierbar sind; und
die Steuereinrichtung (48) ferner dazu konfiguriert ist, die Füllventile (40) jeweils in Abhängigkeit von dem ermittelten Füllvolumen und/oder der erfassten Innenform des in dem Aufnahmeraum (36) der jeweiligen Füllstation (32) positionierten Behälters (12) teilweise zum Positionieren in der ersten Öffnungsstellung und teilweise zum Positionieren in der zweiten Öffnungsstellung zu betreiben, vorzugsweise mit Positionieren in der ersten Öffnungsstellung im letzten Füllabschnitt zum Erreichen der Sollfüllhöhe (S).

4. Vorrichtung (10) nach einem der vorherigen Ansprüche, wobei:
die Steuereinrichtung (48) ferner dazu konfiguriert ist:
- für die Behälter (12) jeweils einen Halsbereich (H) in Abhängigkeit von der von der Behältererfassungseinrichtung (24) erfassten Innenform des jeweiligen Behälters (12) zu erkennen und/oder ein Halsvolumen in Abhängigkeit von der von der Behältererfassungseinrichtung (24) erfassten Innenform des jeweiligen Behälters (12) zu ermitteln; und
- die Füllventile (40) jeweils ferner in Abhängigkeit von dem erkannten Halsbereich (H) und/oder dem ermittelten Halsvolumen des in dem Aufnahmeraum (36) der jeweiligen Füllstation (32) positionierten Behälters (12) zu betreiben, vorzugsweise derart, dass beim Füllen des erkannten Halsbereichs (H) und/oder des ermittelten Halsvolumens eine Füllgeschwindigkeit verringert wird.

5. Vorrichtung (10) nach Anspruch 3 und Anspruch 4, wobei:
die Steuereinrichtung (48) ferner dazu konfiguriert ist, die Füllventile (40) jeweils beim Füllen des erkannten Halsbereichs (H) und/oder des ermittelten Halsvolumens des in dem Aufnahmeraum (36) der jeweiligen Füllstation (32) positionierten Behälters (12) zum Positionieren in der ersten Öffnungsstellung zu betreiben.

6. Vorrichtung (10) nach einem der vorherigen Ansprüche, wobei:
die Behältererfassungseinrichtung (24) zum Erfassen einer jeweiligen Innenform der Behälter (12) dazu ausgebildet ist, mindestens eines zu erfassen von:
- eine jeweilige Innenumfangsfläche der Behälter (12);
- einen jeweiligen Innenumfangsflächenverlauf der Behälter (12);
- eine jeweilige Umfangswandstärke der Behälter (12);
- einen jeweiligen Umfangswandstärkenverlauf der Behälter (12);
- eine jeweilige Bodenwandstärke der Behälter (12);
- einen jeweiligen Bodenwandstärkenverlauf der Behälter (12);
- eine jeweilige Behälterhöhe (B) der Behälter (12);
- eine jeweilige Behältermündung der Behälter (12);
- einen jeweiligen Querschnitt der Behälter (12); und
- einen jeweiligen Querschnittsverlauf der Behälter (12).

7. Vorrichtung (10) nach einem der vorherigen Ansprüche, wobei:
die Behältererfassungseinrichtung (24) ein Drehsystem (30) aufweist, das zum Drehen je eines oder mehrerer der Behälter (12) um eine Hochachse ausgebildet ist; und/oder
die Behältererfassungseinrichtung (24) zum Erfassen einer jeweiligen Innenform der Behälter (12) dazu ausgebildet ist, die Behälter (12) jeweils aus mehreren Winkeln und/oder von mehreren Seiten her zu erfassen.

8. Vorrichtung (10) nach einem der vorherigen Ansprüche, wobei:
die Behältererfassungseinrichtung (24) mindestens eine Kamera, eine Stereokamera, einen 3D-Scanner oder einen Computertomographen aufweist.

9. Vorrichtung (10) nach einem der vorherigen Ansprüche, wobei:
die Steuereinrichtung (48) ferner dazu konfiguriert ist, die Füllventile (40) jeweils ferner in Abhängigkeit von einer Sollmindestfüllmenge zu betreiben, vorzugsweise derart, dass über die Sollfüllhöhe (S) hinaus zum Erreichen der Sollmindestfüllmenge gefüllt wird, wenn die Sollmindestfüllmenge größer als das ermittelte Füllvolumen des jeweiligen Behälters (12) ist.

10. Verfahren zum Betreiben einer Vorrichtung (10) zum Füllen von Behältern (12), vorzugsweise nach einem der vorherigen Ansprüche, wobei die Vorrichtung (10) eine Steuereinrichtung (48), eine Behältererfassungseinrichtung (24) und mehrere Füllstationen (32), die stromabwärts von der Behältererfassungseinrichtung (24) angeordnet sind und jeweils einen Aufnahmeraum (36), ein Füllventil (40) und eine Durchflusserfassungseinrichtung (44) aufweisen, aufweist, wobei das Verfahren aufweist:
Erfassen einer jeweiligen Innenform der Behälter (12) mittels der Behältererfassungseinrichtung (24);
Ermitteln eines jeweiligen Füllvolumens der Behälter (12) bis zu einer Sollfüllhöhe (S) in Abhängigkeit von der erfassten jeweiligen Innenform mittels der Steuereinrichtung (48);
Betreiben der Füllventile (40) zum Füllen des in dem Aufnahmeraum (36) der jeweiligen Füllstation (32) positionierten Behälters (12) mittels der Steuereinrichtung (48) in Abhängigkeit von dem ermittelten Füllvolumen des in dem Aufnahmeraum (36) der jeweiligen Füllstation (32) positionierten Behälters (12) und dem von der Durchflusserfassungseinrichtung (44) erfassten Füllgutdurchfluss zu dem jeweiligen Füllventil (40), vorzugsweise derart, dass das ermittelte Füllvolumen vollständig mit Füllgut gefüllt wird.

11. Verfahren nach Anspruch 10, ferner aufweisend:
Ermitteln eines jeweiligen Kopfvolumens der Behälter (12) für einen sich zwischen einer Behältermündung und der Sollfüllhöhe (S) erstreckenden Kopfbereich (K) der erfassten Innenform des jeweiligen Behälters (12),
wobei das Betreiben der Füllventile (40) zusätzlich abhängig von dem ermittelten Kopfvolumen des in dem Aufnahmeraum (36) der jeweiligen Füllstation (32) positionierten Behälters (12) ist, vorzugsweise derart, dass das jeweilige Kopfvolumen ungefüllt bleibt.

12. Verfahren nach Anspruch 10 oder Anspruch 11, wobei das Betreiben der Füllventile (40) aufweist:
Positionieren der Füllventile (40) jeweils teilweise in einer ersten Öffnungsstellung mit einem ersten Strömungsquerschnitt und teilweise in einer zweiten Öffnungsstellung mit einem zweiten Strömungsquerschnitt, der größer als der erste Strömungsquerschnitt ist, in Abhängigkeit von dem ermittelten Füllvolumen und/oder der erfassten Innenform des in dem Aufnahmeraum (36) der jeweiligen Füllstation (32) positionierten Behälters (12), vorzugsweise mit Positionieren in der ersten Öffnungsstellung im letzten Füllabschnitt zum Erreichen der Sollfüllhöhe (S).

13. Verfahren nach einem der Ansprüche 10 bis 12, ferner aufweisend:
Erkennen eines jeweiligen Halsbereichs (H) der Behälter (12) in Abhängigkeit von der erfassten jeweiligen Innenform mittels der Steuereinrichtung (48) und/oder Ermitteln eines jeweiligen Halsvolumens der Behälter (12) in Abhängigkeit von der erfassten jeweiligen Innenform mittels der Steuereinrichtung (48),
wobei das Betreiben der Füllventile (40) zusätzlich abhängig von dem erkannten Halsbereich (H) und/oder dem ermittelten Halsvolumen des in dem Aufnahmeraum (36) der jeweiligen Füllstation (32) positionierten Behälters (12) ist, vorzugsweise derart, dass beim Füllen des erkannten Halsbereichs (H) und/oder des ermittelten Halsvolumens eine Füllgeschwindigkeit mittels des jeweiligen Füllventils (40) verringert wird.

14. Verfahren nach einem der Ansprüche 10 bis 13, wobei:
das Erfassen der jeweiligen Innenform der Behälter (12) mittels der Behältererfassungseinrichtung (24) aus mehreren Winkeln und/oder von mehreren Seiten her erfolgt; und/oder
beim Erfassen der jeweiligen Innenform der Behälter (12) mittels der Behältererfassungseinrichtung (24), der jeweils erfasste und/oder zu erfassende Behälter (12) mittels eines Drehsystems (30) gedreht wird, vorzugsweise um eine Hochachse.

15. Verfahren nach einem der Ansprüche 10 bis 14, wobei:
das Betreiben der Füllventile (40) zusätzlich abhängig von einer Sollmindestfüllmenge ist, vorzugsweise derart, dass über die Sollfüllhöhe (S) hinaus zum Erreichen der Sollmindestfüllmenge gefüllt wird, wenn die Sollmindestfüllmenge größer als das ermittelte Füllvolumen des jeweiligen Behälters (12) ist.
